# EUROPEAN PATENT APPLICATION

(11) **EP 1 775 210 A1**
(43) Date of publication of application: **18.04.2007**
(21) Application number: 05732900.5
(22) Date of filing: 29.03.2005
(51) Int. Cl.: B62M 9/12

(54) **AUTOMATIC GEARSHIFTING DEVICE FOR A BICYCLE**

(30) Priority: 28.07.2004 CN 200420074033
(71) Applicant: Kwok, Siuleung, N.T. Hong Kong (CN)
(72) Inventor: Kwok, Siuleung, Shatin, N.T. Hong Kong (CN); Kwok, Koonleung, Kowloon, Hong Kong (CN)
(74) Representative: Savolainen, Seppo Kalevi
(86) International application number: PCT/CN2005/000411
(87) International publication number: WO 2006/010304

(57) **Abstract**

An automatic gear shifter for bicycle comprises: a bevel gear coaxially and fixedly mounted on an inner hub of a rear wheel of the bicycle; a rear derailleur; and a speed-changing operating apparatus connected with the bevel gear and connected with the rear derailleur via a connecting rod for performing a gear shifting operation on the rear derailleur. The speed-changing operating apparatus comprises: a housing; an upper and lower worm rotatably supported at a position adjacent to the upper and lower ends of the housing respectively, both having a left-handed helical tooth and parallel with each other; an input transmission mechanism, making upper and lower worms rotate rapidly in a same direction; a flying-top clutch mechanism, making a gear holder mechanism rotate about the supporting shaft according to a speed of the upper worm, driving the worm wheel on the gear holder mechanism to engage with the upper or lower worm and making a stroke frame mechanism move left and right via an output transmission mechanism. Then, a gear shift operation may be performed on the rear derailleur via the connecting rod by a dual-fulcrum elastic member. The automatic gear shifter for bicycle do not need the rider to gear shift by hand in use. It may gear shift automatically according to the speed of the bicycle and thus operates conveniently.

## Description

### TECHNICAL FIELD

The present invention relates to a gear shifter, especially to an automatic gear shifter for bicycle which may automatically perform a gear shifting operation on a rear derailleur according to the speed of the bicycle.

### BACKGROUND OF THE INVENTION

A bicycle that has a speed-changing function is generally equipped with a rear sprocket formed of multiple discs and a rear derailleur at the rear part of a frame F. When a rider who rides the bicycle wants to change the speed, he or she has to pull an idle sprocket of the rear derailleur by a manually speed-changing operating unit mounted on a handle bar, so as to make a chain that was previously engaged with a disc of the rear sprocket move parallelly to another disc of it, thereby changing a shift position.

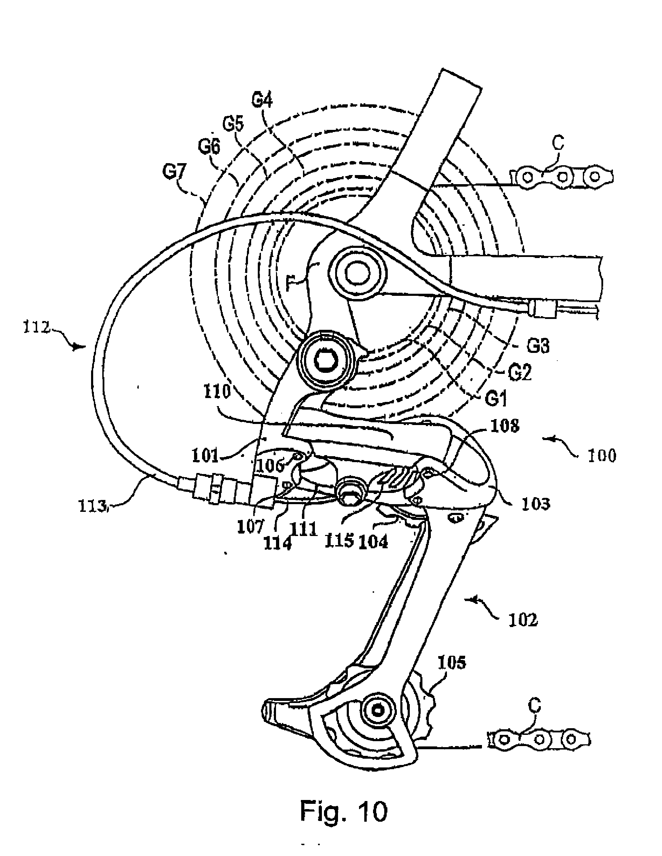

FIG. 10 shows a typically known derailleur 100. This derailleur comprises a base member 101 mounted on the frame F of the bicycle; a movable member 103 supporting a chain guider 102, the chain guider then rotatably supports a jockey sprocket 104 and an idle sprocket 105; and a link rod 110 rotatably connected between the base member 101 and the movable member 103 by swivel pins 106,107,108, 109. A sheath 113 of a control cable 112 is fixed to the base member 101, and an inner core 114 thereof is connected with the link rod 110. Pulling and releasing the inner core 114 may make the movable member 103 move relative to the base member 101, then under a tensioning force of a return spring 115 and in a conventional manner, the movable member 103 may make the chain guider 102 guide a chain C to a selective position below a group of sprockets G1-G7.

Accordingly, in the prior art, when the rider wants to change the speed of the bicycle, he or she has to operate the speed-change operating unit continuously by hand, so as to for example pull the control cable and move the chain to be on a smaller sprocket, thereby gear shifting to an upshift position, or release the control cable and move the chain to be on a larger sprocket, thereby gear shifting to a downshift position. The manual operation as above is very inconvenient, not capable of achieving an automatic gear shift.

### SUMMARY OF THE INVENTION

An object of the present invention is to provide an automatic gear shifter for bicycle which may perform an automatic gear shifting operation on a derailleur in response to a speed change of the rear wheels of the bicycle and thus operates conveniently.

According to the present invention, there is provided an automatic gear shifter for bicycle comprising: a rotation-outputting member coaxially and fixedly mounted on an inner hub of a rear wheel of the bicycle; a rear derailleur; and a speed-changing operating apparatus adapted to be fixed on a frame of the bicycle, the speed-changing operating apparatus connecting with the rotation-outputting member on the inner hub of the rear wheel of the bicycle, and connecting with the rear derailleur via a connecting rod and performing a gear shifting operation on the rear derailleur; the speed-changing operating apparatus comprising: a housing comprised of a bottom wall, a left sidewall, a right sidewall, a middle wall and a top plate integral with the middle wall; an upper worm installed at a position adjacent to the upper end of the housing and rotatably supported between the left sidewall and the right sidewall, a left-handed helical tooth being provided on the left part of the upper worm and a round rod being provided at its right end; a lower worm installed at a position adjacent to the lower end of the housing and rotatably supported between the left sidewall and the middle wall, the lower worm being parallel with the upper worm and a left-handed helical tooth being provided on the lower worm; an input transmission mechanism used to transmit a rotation from the rotation-outputting member mounted on the inner hub of the rear wheel to the upper worm and the lower worm and make them rotate rapidly in a same clockwise direction viewed from an inputting direction; a flying-top clutch mechanism comprised of a pair of flying tops swingably mounted on two sides of the round rod part at the right end of the upper worm, a sliding bush sliding left and right at the left side of the flying tops along a round rod part at the right end of the upper worm, and two pulling wires connecting two flying tops with the sliding bush respectively, the flying tops spreading out under an action of the centrifugal force generated when the upper worm rotates at a high speed, and then pulling the sliding bush toward right through the pulling wires; a gear holder mechanism including an inverted dual-L-shape bracket, a pivot hole being provided at the corner part of either L-shape bracket, the bracket swinging about a supporting shaft lying between the upper worm and the lower worm, two ends of the supporting shaft being fixed respectively to the bottom wall and the top plate, a mounting hole for fixing a wormwheel shaft being provided at the end of a lower arm of either L-shape bracket, a hole for fixing an end of a tension spring being provided between the mounting hole of the upper L-shape bracket and the pivot hole, a half-round end head being provided at the end of an upper arm of either L-shape bracket and it abuting against the right side of the sliding bush of the flying-top clutch mechanism, when the sliding bush slides toward right, it pushing the end head and thus causing the dual-L-shape bracket to swing about the supporting shaft in the clockwise direction, and when the sliding bush stops pushing the end head, the dual-L-shape bracket swinging in the counterclockwise direction under the tension force of the tension spring, the gear holder mechanism also comprising a stroke-limiting sheet integral with the dual-L-shape bracket, a left bevel edge and a right bevel edge having an angle of about 45° being provided respectively at two sides in an opening of the stroke-limiting sheet; an output transmission mechanism comprised of a bevel gear and a spur gear rotatably mounted on the supporting shaft and coaxially and fixedly connecting with each other, a bevel gear rotatably supported on the middle wall of the housing and engaging with the bevel gear on the supporting shaft, a leading screw having a left end connecting with the right end of the bevel gear on the middle wall of the housing and a right end supporting in the right sidewall, and a worm wheel and a spur gear rotatably mounted on a wormwheel shaft and coaxially and fixedly connected with each other, the wormwheel shaft being secured in the mounting holes on the end of the lower arms of the dual-L-shape bracket, the spur gear on the wormwheel shaft engaging with the spur gear on the supporting shaft, when the dual-L-shape bracket swings in the clockwise direction, the worm wheel engaging with the upper worm, the engagement point between them pushing the worm wheel towards the supporting shaft side along the tangential line of the worm wheel and causing the worm wheel to rotate in the clockwise direction, and when the dual-L-shape bracket swings in the counterclockwise direction, the worm wheel engaging with the lower worm, the engagement point between them pushing the worm wheel towards the supporting shaft side along the tangential line of the worm wheel and causing the worm wheel to rotate in the counterclockwise direction; a small boss being provided on the lateral side of the worm wheel and moving between two ends of an arc groove provided in the lateral side of the worm wheel, a spinning rod being rotatably mounted on the wormwheel shaft, a rod head of the spinning rod being disposed adjacent to the cirumferential of the worm wheel and being held by a free end of a spring steel wire fixed on the upper-L-shape bracket, due to a drive of the small boss, the spinning rod head rotating to the engagement points between the worm wheel and the upper or lower worm and making them disengage; a stroke frame mechanism comprising a frame body moving left and right in the housing, an internal screw used to engage with the leading screw being provided at the upper end of the frame body, a forked frame sheet being swingably mounted on the frame body, an upper forked sheet at the front end of the forked frame sheet connecting with the other end of the tension spring on the gear holder mechanism and an lower forked sheet having a sloped edge that gradually branches off towards downward, the lower forked sheet slidably contacting with a bracket provided on the bottom wall of the housing and causing the forked frame sheet to swing up and down so as to adjust the tension force of the tension spring; a small bearing being disposed below a lateral surface of the frame body of the stroke frame mechanism, when the stroke frame mechanism moves to a position adjacent to left or right, the small bearing slidably contacting with the left or right bevel edge in the opening of the stroke-limiting sheet; a dual-fulcrum elastic member secured at the lower end of the stroke frame mechanism, the elastic member comprising a base plate, left and right fulcrums disposed at the lower part of the base plate, an inverted T-shape sliding sheet wedged by and disposed on the fulcrums and swinging left and right about one of two fulcrums, and a tension spring connected between a fulcrum at the top end of the sliding sheet and a fixed point at the lower end of the base plate, one end of the connecting rod being rotatably connected with the fulcrum at the top end of the sliding sheet and the other end of it being rotatably connected with the rear derailleur.

In the automatic gear shifter for bicycle described above, perferably the rotation-outputting member comprises a bevel gear, the input transmission mechainism comprises a pinion connected with the left end of the upper worm, a pinion connected with the left end of the lower worm, a middle gear disposed between two pinions and eageged with them, and a bevel gear coaxially and fixedly connected with the middle gear, the bevel gear may engage with the bevel gear fixedly mounted on the inner hub of the rear wheel of the bicycle.

In the automatic gear shifter for bicycle described above, perferably when the dual-L-shape bracket swings about the supporting shaft in the clockwise direction, the worm wheel may engage with the upper worm that rotates at a high speed, thus making the output transmission mechanism generates a rotary output at a low speed in a direction; when the dual-L-shape bracket lies in a middle position between the upper and lower worms, the cirumferential of the tooth top of the worm wheel may keep a certain distance from the tooth tops of the upper and lower worms, thus stopping the power transmission; when the dual-L-shape bracket swings about the supporting shaft in the counterclockwise direction, the worm wheel may engage with the lower worm that rotates at a high speed, thus making the output transmission mechanism generates a rotary output at a low speed in an opposite direction.

In the automatic gear shifter for bicycle described above, perferably the small boss is inserted into one end of a flat bar, and the other end of the flat bar is rotatably supported on the wormwheel shaft.

In the automatic gear shifter for bicycle described above, perferably a distance between two ends of the arc groove may be changed to lengthen or shorten a reverse stroke, thus cancelling out a gap between various movable members.

In the automatic gear shifter for bicycle described above, perferably a position-limiting elastic sheet is provided at a position of the stroke-limiting sheet adjacent to the right bevel edge, and a projecting sheet is provided at the right side of the frame body of the stroke frame mechanism, when the stroke frame mechanism moves toward right to arrive at a position corresponding to the lowest shift position, i.e., the first shift position, due to an action of the spinning rod, the dual-L-shape bracket swings in the clockwise direction and the worm wheel disengages with the lower worm, the projecting sheet abuts against the position-limiting elastic sheet and makes the dual-L-shape bracket incapable of swinging in the counterclockwise direction, thus stopping the stroke frame mechanism from moving toward right continuously.

In the automatic gear shifter for bicycle described above, perferably a small gap is provided at a joint between the forked frame sheet and the frame body of the stroke frame body, so as to delay to push the forked frame sheet when the stroke frame moves reversely, thus cancelling out the ⅓ circle increased when the worm wheel rotates reversely and making a connecting point between the tension spring and the forked frame sheet stop at a same position as the worm wheel rotates straightforwardly.

### BRIEF DESCRIPTION OF THE DRAWINGS

Fig. 1 is a side view showing an automatic gear shifter according to the present invention connected with a frame of a bicycle ;
Fig. 2 is a view showing the connection among a speed-changing operating apparatus of the automatic gear shifter for bicycle according to the present invention, a rear derailleur and a rear sprocket of the bicycle ;
Fig. 3 is an assembled perspective view showing the speed-changing operating apparatus of the gear shifter for bicycle according to the present invention;
Fig. 4 is an exploded perspective view showing the speed-changing operating apparatus of the gear shifter for bicycle according to the present invention;
Fig. 5 is an assembled side view showing the speed-changing operating apparatus of the gear shifter for bicycle according to the present invention;
Fig. 6 is a partially enlarged view of Fig. 5, showing the action of a flying-top clutch mechanism and a gear holder mechanism;
Fig. 7 is an exploded view showing a small boss and a spinning rod on a worm wheel;
Fig. 8 is a partially enlarged view of a position-limiting elastic sheet;
Fig. 9 is a view showing the action of a dual-fulcrum elastic member; and
Fig. 10 is a side view showing a rear derailleur according to the prior art connected with a frame of a bicycle.

### DETAILED DESCRIPTION OF THE EMBODIMENTS

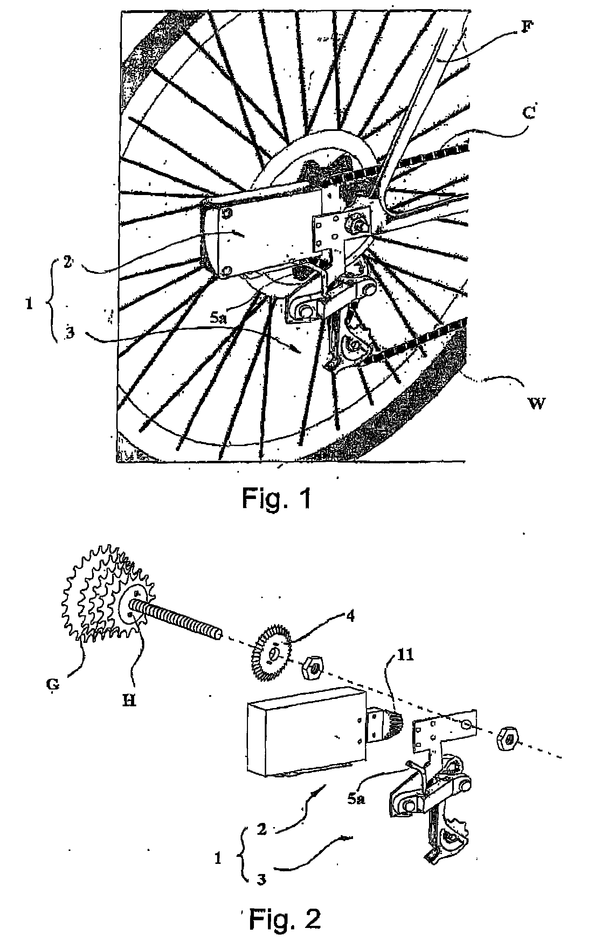

As shown in FIGS. 1 and 2, an automatic gear shifter 1 for bicycle according to the present invention is comprised of a speed-changing operating apparatus 2 and a rear derailleur 3. An inner hub H of a rear wheel W of the bicycle is coaxially connected with a bevel gear 4 that acts as a rotation-outputting member. The bevel gear may rotate with the wheel W in a clockwise direction as shown in the figures. The rotation-outputting member may adopt a spur gear or other forms. The speed-changing operating apparatus 2 is fixed to the frame F of the bicycle, and its bevel gear 11 for inputting power (described subsequently) is made to engage with the bevel gear 4 on the rear wheel W. The rear derailleur 3 is installed at the lower part of the speed-changing operating apparatus. The rear derailleur 3 may adopt a common rear derailleur, but the return spring in the common rear derailleur has to be removed. Furthermore, a push-pull rod 5a that has a shape as the Arabic numeral "7" is installed at the proximal of swivel pin 107 to the link rod 110, and it pivotally connects with a dual-fulcrum elastic member 90 (described subsequently) of the speed-changing operating apparatus 2 through a connecting rod 5. By means of this connecting rod 5, the movable member of the rear derailleur 3 may move relative to the base member of it in two directions and make the chain C move to a position below another sprocket, thereby performing a gear shifting operation.

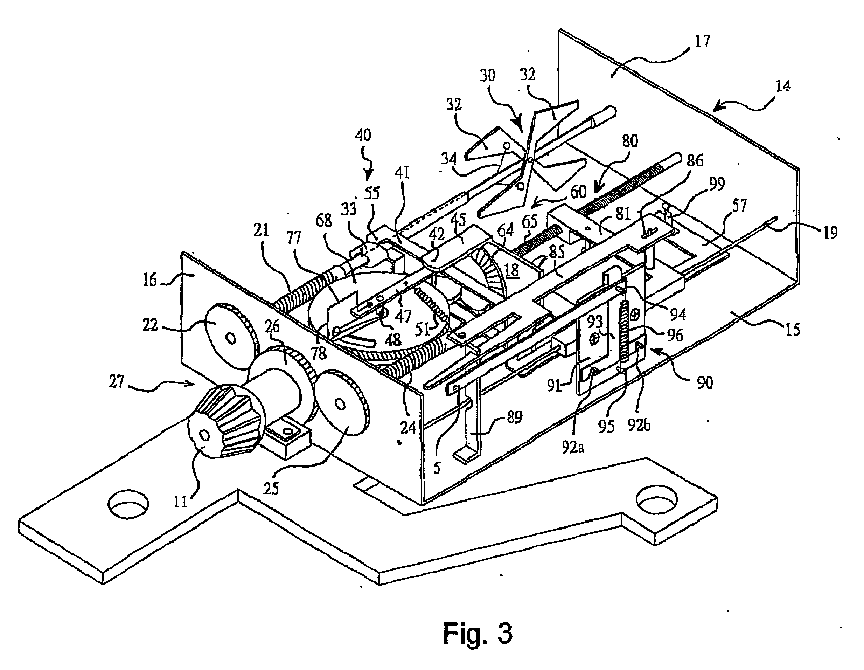

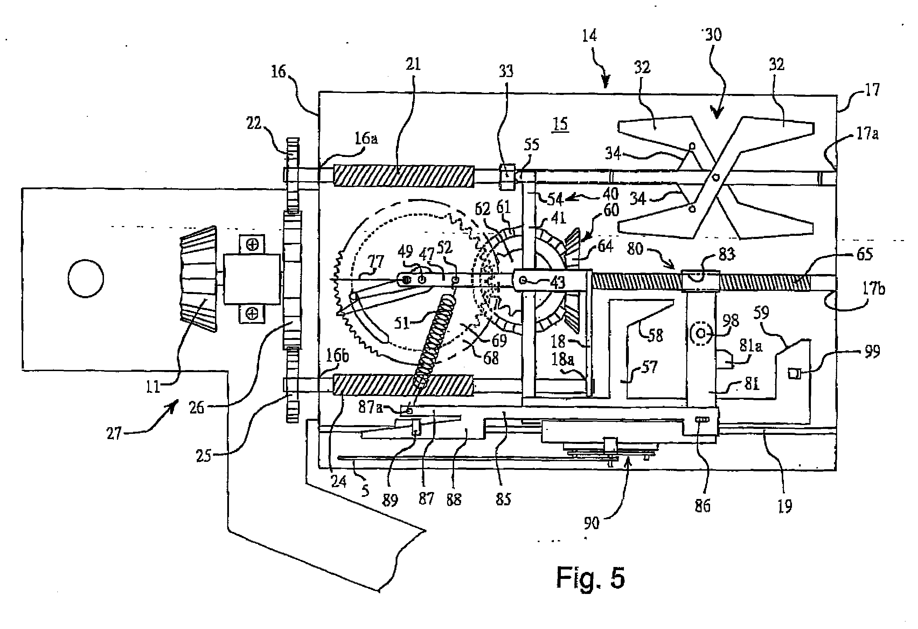

FIGS. 3 to 5 show respectively an assembled perspective view, an exploded perspective view and an assembled view of the speed-changing operating apparatus 2 of the automatic gear shifter 1 for bicycle. A housing 14 comprises a bottom wall 15, a left sidewall 16, a right sidewall 17 and a middle wall 18. A sliding rod 19 is fixed between the left sidewall 16 and the right sidewall 17.

At a position near the upper end of the housing 14 (in relation to a position at which the speed-changing operating apparatus lies when it is mounted and used), an upper worm 21 is rotatably installed in a supporting hole 16a of the left sidewall 16 and a supporting hole 17a of the right sidewall 17. A part of the worm 21 that lies between the left sidewall 16 and the middle wall 18 is provided with a left-handed helical tooth. An end of the worm 21 that protrudes the left sidewall 16 is provided with a pinion 22. At a position near the lower end of the housing 14, a lower worm 24 parallel with the upper worm 21 is rotatably installed in a supporting hole 16b of the left sidewall 16 and a supporting hole 18a of the middle wall 18. The lower worm 24 is provided with a left-handed helical tooth. Also, an end of the worm 24 that protrudes the left sidewall 16 is provided with a pinion 25. A middle gear 26 that is coaxially and fixedly connected with a bevel gear 11 may be interposed between the pinions 22 and 25. The pinion 22, the middle gear 26, the pinion 25 and the bevel gear 11 described above constitute an input transmission mechanism 27. As described above, when the speed-changing operating apparatus 2 is fixed to the frame F, the bevel gear 11 engages with the bevel gear 4 of the rear wheel W. In this way, when the rear wheel W rotates in the clockwise direction in FIG. 1, the bevel gear 11 may drive the upper worm 21 and the lower worm 24 to rotate at a high speed in the same direction (the clockwise direction seen from the left in FIG. 3).

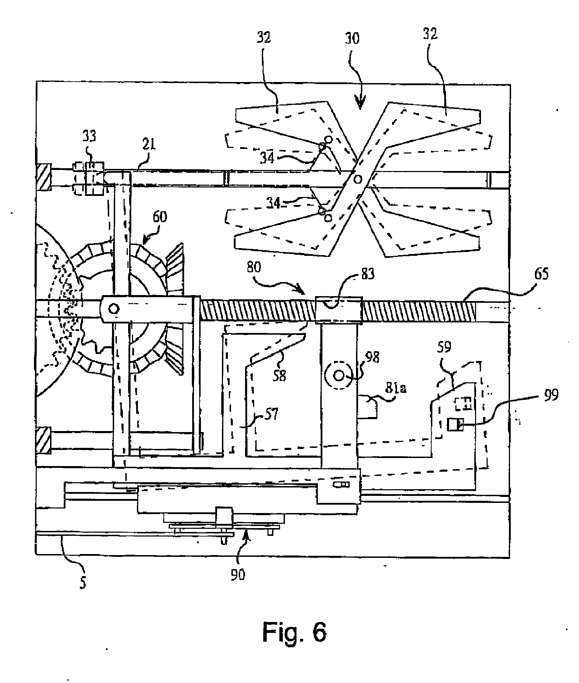

FIGS. 3 to 6 show a flying-top clutch mechanism 30 of the speed-changing operating apparatus 2. The flying-top clutch mechanism 30 comprises a pair of flying tops 32 that are swingably fixed at two sides of the right end of the upper worm 21 between the middle wall 18 and the right sidewall 17, a sliding bush 33 that may slide left and right at the left side of the flying tops 32 along a round rod part of the right end of the upper worm 21, and two pulling wires that connect two flying tops 32 with the sliding bush 33 respectively. When the upper worm 21 rotates at a high speed, the flying tops 32 may spread out under an action of the centrifugal force and then pull the sliding bush 33 toward right through the pulling wires 34. More specifically, as shown in FIG. 6, the flying tops 32 move from a position shown by a broken line to a position shown by a solid line.

Furthermore, FIGS. 3 to 6 show a gear holder mechanism 40 comprising an inverted dual-L-shape bracket 41. A pivot hole 42 is provided at the corner part of either L-shape bracket. The bracket 41 may swing about a supporting shaft 43, which lies between the upper worm 21 and the lower worm 24 on the bottom wall 15 of the housing 14. Two ends of the supporting shaft 43 are fixed respectively to the bottom wall 15 and a top plate 45, which is integral with the middle wall 18. A mounting hole 49 for fixing a wormwheel shaft 48 is provided at the end of the lower arm 47 of either L-shape bracket 41. A hole 52 for fixing an end of a tension spring 51 is provided between the mounting hole 49 and the pivot hole 42 of the upper L-shape bracket 41. The other end of the spring 51 is fixed to a stroke frame (described subsequently). A half-round end head 55 is provided at the end of the upper arm 54 of either L-shape bracket 41, and it abuts against the right side of the sliding bush 33 of the flying-top clutch mechanism 30. When the sliding bush 33 slides toward right, it may push the end head 55 and thus cause the dual-L-shape bracket 41 to swing about the supporting shaft 43 in the clockwise direction, and when the sliding bush 33 stops pushing the end head 55, the dual-L-shape bracket 41 may swing in the counterclockwise direction under the tension force of the tension spring 51. Furthermore, the gear holder mechanism 40 comprises a stroke-limiting sheet 57 integral with the dual-L-shape bracket 41. The stroke-limiting sheet 57 is a rectangle flat sheet that opens upward. A left bevel edge 58 and a right bevel edge 59 that have an angle of about 45° are provided respectively at two sides in the opening. When a stroke frame mechanism 80 moves left and right, a small bearing 98 (described subsequently) on it may slide along the left bevel edge 58 or the right bevel edge 59, making the dual-L-shape bracket 41 to swing about the supporting shaft 43.

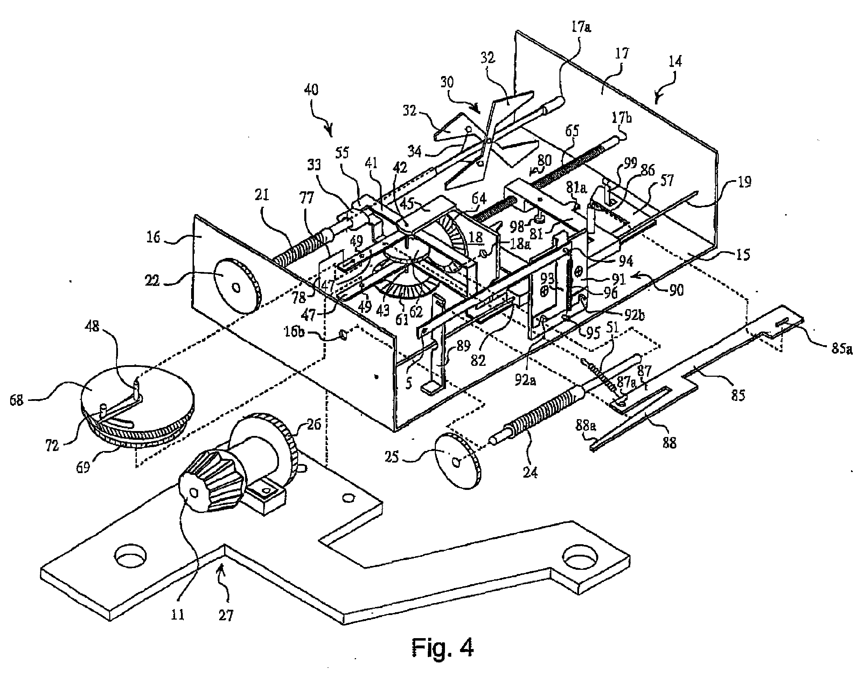

Furthermore, FIGS. 3 to 6 show an output transmission mechanism 60 comprising: a bevel gear 61 and a spur gear 62 that are rotatably mounted on the supporting shaft 43, the bevel gear 61 is coaxially and fixedly connected with the spur gear 62; a bevel gear 64 that is rotatably supported on the middle wall 18 of the housing 14 and engages with the bevel gear 61; and a leading screw 65 that has a left end connecting with the right end of the bevel gear 64 and a right end supported in the supporting hole 17b of the right sidewall 17 of the housing 14. The leading screw 65 may mate with the stroke frame mechanism 80 described subsequently, causing the later to move left and right. Furthermore, the output transmission mechanism 60 comprises a worm wheel 68 rotatably mounted on the wormwheel shaft 48 and a spur gear 69 coaxially and fixedly connected with the worm wheel 68. The spur gear 69 keeps engaged with the spur gear 62 mounted on the supporting shaft 43. The wormwheel shaft 48 is secured in two mounting holes 49 on two lower arms 47 of the dual-L-shape bracket 41. The dual-L-shape bracket 41 can swing about the supporting shaft 43, so that it may drive the worm wheel 68 to swing about the supporting shaft 43. Before the dual-L-shape bracket 41 swings, the cirumferential of the tooth top of the worm wheel 68 keeps a certain distance for example about 1mm from the tooth tops of the upper and lower worms 21 and 24. In this way, when the dual-L-shape bracket 41 swings in the clockwise direction, the worm wheel 68 may be made to engage with the upper worm 21 rapidly. The engagement point between them may push the worm wheel 68 towards the supporting shaft side along the tangential line of the worm wheel 68. Due to the drive of the left-handed helical tooth of the upper worm 21, the worm wheel 68 may be made to rotate in the clockwise direction. Through the drive of the spur gear 69, the spur gear 62, the bevel gear 61 and the bevel gear 64, the leading screw 65 may be made to rotate in the clockwise direction (seen from left in FIG. 4). Similarly, when the dual-L-shape bracket 41 swings in the counterclockwise direction, the worm wheel 68 may be made to engage with the lower worm 24 rapidly. The engagement point between them may push the worm wheel towards the supporting shaft side along the tangential line of the worm wheel. Due to the drive of the left-handed helical tooth of the lower worm 24, the worm wheel 68 may be made to rotate in the counterclockwise direction. In this way, under the action of the output transmission mechanism 60, a rotary motion input by the input transmission mechanism 27 may be converted into a rectilinear motion of the stroke frame mechanism 80 (described subsequently).

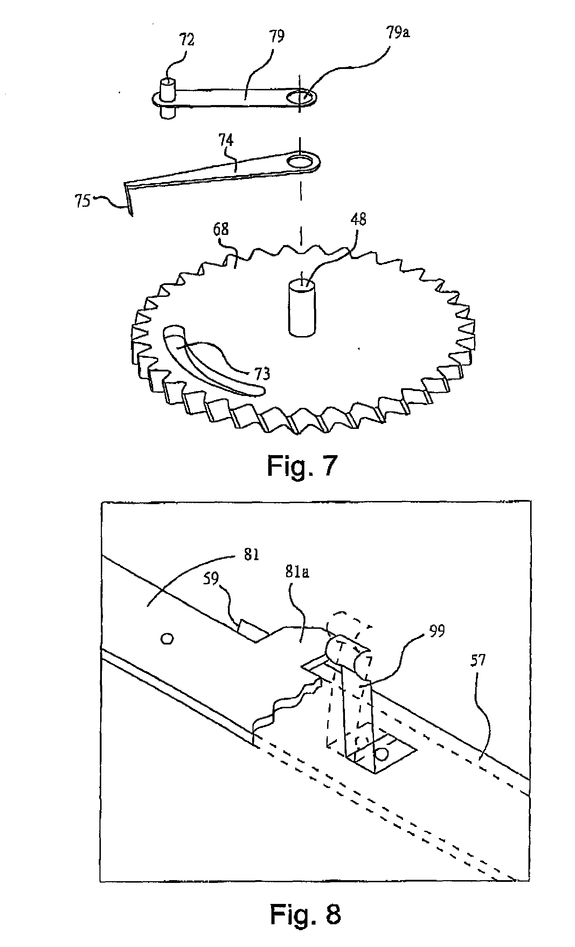

As seen in FIGS. 4, 5 and 7, a small boss 72 may be provided on the lateral side of the worm wheel 68 and move between two ends of an arc groove 73, which is provided in the lateral side of the worm wheel 68. Furthermore, a spinning rod 74 may be rotatably mounted on the wormwheel shaft 48, and a rod head 75 of the spinning rod 74 may be disposed adjacent to the cirumferential of the tooth top of the worm wheel 68. If the worm wheel 68 engages with the upper worm 21 and rotates one circle in the clockwise direction, the small boss 72 drives the spinning rod 74 to rotate. When the spinning rod head 75 arrives at the engagement point between the worm wheel 68 and the upper worm 21, it causes the worm wheel 68 to disengage with the upper worm 21. After disengagement, the spinning rod 74 lies in a position right to an hour hand that points at twelve, and the small boss 72 lie in the left of the spinning rod 74. At this time, if the bicycle accelerates, the worm wheel 68 may be pulled upward to engage with the upper worm 21 under the centrifugal force of the flying tops. The small boss 72 drives the spinning rod 74 to rotate one circle in the clockwise direction and then causes the worm wheel 68 to disengage with the upper worm 21. Also, the spinning rod 74 stops at a position right to the hour hand that points at twelve, and the small boss 72 lie in the left of the spinning rod 74. At this time, if the bicycle decelerates, the worm wheel 68 may engage with the lower worm 24 and rotate in the counterclockwise direction. Because the small boss 72 lies in the left of the spinning rod 74, only after it rotates one circle to arrive at the right of the spinning rod 74, it may drive the spinning rod to rotate to the engagement point between the worm wheel 68 and the lower worm 24, that is to say, a position of the hour hand that points at six, and makes them disengage. Because the engagement points between the worm wheel and the upper worm and between the worm wheel and the lower worm differ from each other by 180°, after the worm wheel disengages with the upper or lower worm and then engages with the same worm, it needs to rotate only one circle to disengage with that worm, but after it disengages with that worm and then engages with the other worm, it needs to rotate more than one circle (about 1⅓ circle) to disengage with the other worm. In this way, it may exactly cancel out a gap among various movable components occurred when rotating reversely, making the gear shifting operation smoother. In order to make the reverse gear shifting operation more accurate, it may change a distance between two ends of the arc groove; that is to say, it may lengthen or shorten a stroke of the reverse gear shifting operation. As seen in FIGS. 3, 4 and 5, a spring steel wire 77 may be secured on the end of lower arm 47 of the upper L-shape bracket 41 and its free end 78 extends to the cirumferential of the worm wheel 68. This spring steel wire 77 may hold the spinning rod head 75, avoiding the later rotating to a position between the worm wheel 68 and the lower worm 24 due to its self weight, which may make the worm wheel disengage with the worm ahead of time and influence the normal operation. But due to the drive of the small boss 72, the spinning rod head 75 may flick the free end 78 of the spring steel wire 77 away and rotate continuously. In this embodiment, as shown in FIG. 7, the small boss 72 may be inserted into one end of a flat bar 79. The other end of the flat bar 79 has a round hole 79a, which makes the flat bar 79 capable of being rotatably supported on the wormwheel shaft 48. Of course, the small boss 72 may be fixed using other methods, for example, it may be embedded into the arc groove 73.

Furthermore, FIGS. 3 to 6 show a stroke frame mechanism 80 comprising a frame body 81. The frame body 81 is provided with a supporting hole 82 at the lower end thereof, and it fits over the sliding rod 19 that is secured on the housing 14 so as to slide left and right. An internal screw 83 used to engage with the screw of the leading screw 65 may be provided at the upper end of the frame body 81. A rear end of a forked frame sheet 85 is rotatably mounted on a fulcrum 86 of the frame body 81. At the front end of the forked frame sheet 85, a round hole 87a of an upper forked sheet 87 connects with the other end of the tension spring 51 on the gear holder mechanism 40. An lower forked sheet 88 has a sloped edge 88a that gradually branches off towards downward. When the lower forked sheet 88 abuts against a bracket 89 provided on the bottom wall 15 of the housing 14 and slides toward left, the forked frame sheet 85 may be made to swing about the fulcrum 86 in the counterclockwise direction. Therefore, the tension spring 51 may be further tensioned and its tensile force may increase, so as to balance with the increased centrifugal force of the flying tops 32. As described above, if the rotating direction of the worm wheel 68 in this operation is opposite to that of it in the operation just completed, the circle number that the worm wheel 68 rotates in this operation may increase ⅓ circle compared with that in the operation just completed. Therefore, a small gap 85a has to be provided at a joint between the forked frame sheet 85 and the fulcrum 86 of the stroke frame body 81, thus delaying to push the forked frame sheet when the stroke frame moves reversely so as to cancel out the ⅓ circle increased when the worm wheel rotates reversely, and thus making a connecting point between the tension spring 51 and the forked frame sheet 85 stop at a same position as the worm wheel rotates straightforwardly.

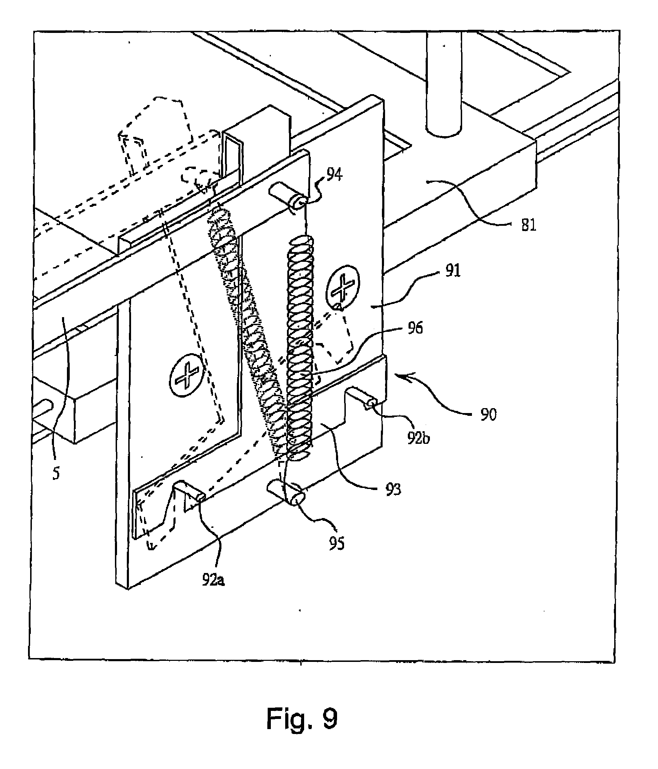

Furthermore, a dual-fulcrum elastic member 90 (referring to FIG. 9) may be secured at the lower end of the stroke frame mechanism 80. This elastic member 90 comprises a base plate 91, left and right fulcrums 92a and 92b disposed at the lower part of the base plate 91, an inverted T-shape sliding sheet 93 that may be wedged by and disposed on the fulcrums 92a and 92b and that may swing left and right about one of two fulcrums 92a and 92b, and a tension spring 96 that may be connected between a fulcrum 94 at the top end of the sliding sheet 93 and a fixed point at the lower end of the base plate 91 and that causes the sliding sheet 93 to abut against two fulcrum 92a and 92b. The fulcrum 94 at the top end of the sliding sheet 93 connects with the rear derailleur 3 via the connecting rod 5 (referring to FIGS. 2 and 3), which is pivotally connected between them. Therefore, when the stroke frame mechanism 80 moves left and right, the movable member of the rear derailleur 3 may move relative to the base member by the connecting rod 5, making the chain C move to a position on the smaller or larger rear sprocket. When a pedal of the bicycle stops rotating, that is to say, the chain C stops moving, the chain C cannot change its position. Therefore, when the speed-changing operating apparatus 2 operates and the pedal does not cooperate, if the rotating speed of the rear wheel of the bicycle changes and the stroke frame mechanism is caused to change its position, the dual-fulcrum elastic member 90 may pull one of two fulcrums 92a and 92b forward or backward so as to tension the spring 96. Accordingly, the connecting rod 5 connected with the fulcrum 94 at the top end of the sliding sheet keeps stationary until the pedal rotates again, that is to say, it restores automatically to the normal position.

A small bearing 98 is disposed below a lateral surface of the frame body 81 of the stroke frame mechanism 80 and lies between left and right bevel edges 58 and 59 in the opening of the stroke-limiting sheet 57 of the gear holder mechanism 40. When the stroke frame mechanism 80 moves toward left to a position corresponding to the highest-speed shift position, the small bearing 98 may abut against and slide along the left bevel edge 58 of the stroke-limiting sheet 57, making the dual-L-shape bracket 41 of the gear holder mechanism 40 swing in the counterclockwise direction and making the worm wheel 68 disengage with the upper worm 21. Therefore, the stroke frame mechanism 80 may no longer move toward left. On the contrary, when the stroke frame mechanism 80 moves toward right to a position corresponding to the lowest-speed shift position, the small bearing 98 may abut against and slide along the right bevel edge 59 of the stroke-limiting sheet 57.

As seen in FIGS. 3, 4, 6 and 8, a position-limiting elastic sheet 99 may be provided at a position of the stroke-limiting sheet 57 adjacent to the right bevel edge 59, and a projecting sheet 81a may be provided at the right side of the frame body 81 of the stroke frame mechanism 80. When the stroke frame mechanism 80 moves toward right to a position corresponding to the lowest-speed shift position, the small boss 72 on the lateral side of the worm wheel may drive the spinning rod head 75 to the engagement point between the worm wheel 68 and the lower worm 24, making the dual-L-shape bracket 41 swing in the clockwise direction and making the worm wheel 68 disengage with the lower worm 24. The projecting sheet 81a on the frame body 81 abuts against the position-limiting elastic sheet 99, making the dual-L-shape bracket 41 of the gear holder mechanism 40 incapable of swinging in the counterclockwise direction. Therefore, the stroke frame mechanism 80 may no longer move toward right.

If the speed-changing operating apparatus is required to change to a higher-speed shift position or to maintain at a high-speed shift position, the bicycle has to be at a certain speed. Therefore, when the speed is low, for example, when the bicycle starts to move again after the rider brakes it under a high-speed shift position, or when the bicycle is pushed to move after the rider suddenly stops it and gets off, the speed-changing operating apparatus may restore to the first shift position, since either its starting to move again or its being pushed to move is at a low speed.

In the following, the action of the automatic gear shifter for bicycle according to the present invention may be described.

When the bicycle stops moving, that is to say, when the rear wheel W stops rotating, the stroke frame mechanism 80 of the speed-changing operating apparatus 2 lies at its most right position, and the chain guider of the rear derailleur 3 causes the chain C to be at the first shift position of the lowest shift position (on the largest rear sprocket).

When the bicycle starts to move and the rear wheel W begins to rotate, the rotation of the rear wheel W make the upper worm 21 and the lower worm 24 rotate in the same direction via the input transmission mechanism 27 of the speed-changing operating apparatus 2. Because the rotating speed is low, the flying top 32 of the flying-top clutch mechanism 30 may not act. The stroke frame mechanism 80 still lies at its most right position, and the rear derailleur 3 operates at the first shift position of the lowest shift position. As the pedal accelerates the rotating motion, the rear wheel W begins to rotate more quickly, making the upper and lower worm 21 and 24 rotate at a higher speed. Accordingly, the flying top 32 may open a certain angle under the action of the centrifugal force and pull the sliding bush 33 toward right by the pulling wires 34. Then, the sliding bush 33 may push the dual-L-shape bracket 41 of the gear holder mechanism 40 toward right and cause it to rotate in the clockwise direction, so as to drive the worm wheel 68 to engage with the upper worm 21. Because the engagement point between the worm wheel 68 and the upper worm 21 forms an oblique angle relative to the pivot point (the supporting shaft 43) of the worm wheel 68, and the rotating motion of the upper worm 21 which is left-handed pushes the worm wheel 68 toward the pivot point, the worm wheel may engage with the upper worm tightly once they contact. Therefore, it may not occur such undesirable conditions as impaction. At this point, the rotating motion of the upper worm 21 makes the leading screw 65 rotate in the clockwise direction viewed from the left in FIG. 4 via the transmission of the output transmission mechanism 60. At this time, the internal screw 83 of the stroke frame mechanism 80 engages with the screw (which is a right-handed screw in a normal condition) of the leading screw 65 and begins to move toward left. The dual-fulcrum elastic member 90 of the stroke frame mechanism 80 causes the rear derailleur 3 to change to the second shift position having a higher speed via a connecting rod 5. Because the worm wheel 68 rotates a circle every time when gear shifting straightforwardly, the small boss 72 on the worm wheel 68 may rotate the spinning rod 74 to the engagement point between the worm wheel 68 and the upper worm 21 and make them disengage. Because the tensile force of the tension spring 51 that is fixed between the dual-L-shape bracket 41 of the gear holder mechanism 40 and the forked frame sheet 85 of the stroke frame mechanism 80 increases as the stroke frame mechanism 80 moves toward left so as to balance with the increased centrifugal force of the flying top 32 as the rotating speed of the flying top 32 increases, the worm wheel 68 may keep staying at a position between the upper and lower worm 21 and 24 after it disengages with the upper worm 21. At this time, the rear derailleur 3 may keep staying on its corresponding gear shifting position. In this way, as the rear wheel W accelerates, the speed-changing operating apparatus 2 may continuously gear shift to a higher-speed shift position.

Similarly, when the bicycle decelerates, that is to say, the rotating speed of the rear wheel W decreases, the centrifugal force of the flying top 32 may decrease. At this time, under the pulling force of the tension spring 51 of the stroke frame mechanism 80, the worm wheel 68 may engage with the lower worm 24. Therefore, contrary to the above action, the stroke frame mechanism 80 is made to move toward right. Accordingly, the rear derailleur 3 may change to a lower-speed shift position. At this time, if the worm wheel 68 rotates in the counterclockwise direction, the small boss 72 on the worm wheel 68 begins to move along with the worm wheel 68 only after it moves to the other end of the arc groove 73 relative to the worm wheel 68. Therefore, before the small boss 72 drives the spinning rod 74 to the engagement point between the worm wheel 68 and the lower worm 24 and makes them disengage, the spinning rod 74 on the worm wheel 48 needs the worm wheel to rotate more than one circle. In this manner, a gap between the movable components occurred when rotating reversely may be exactly cancelled out, making the gear shifting operation smoother.

As known from the above description, the automatic gear shifter for bicycle according to the present invention do not need the rider to gear shift by hand continuously in use. It may gear shift automatically according to the speed of the bicycle and thus operates conveniently.

## Claims

1. An automatic gear shifter for bicycle comprising:
a rotation-outputting member coaxially and fixedly mounted on an inner hub of a rear wheel of the bicycle;
a rear derailleur; and
a speed-changing operating apparatus adapted to be fixed on a frame of the bicycle, the speed-changing operating apparatus connecting with the rotation-outputting member on the inner hub of the rear wheel of the bicycle, and connecting with the rear derailleur via a connecting rod and performing a gear shifting operation on the rear derailleur;
the speed-changing operating apparatus comprising:
a housing comprised of a bottom wall, a left sidewall, a right sidewall, a middle wall and a top plate integral with the middle wall;
an upper worm installed at a position adjacent to the upper end of the housing and rotatably supported between the left sidewall and the right sidewall, a left-handed helical tooth being provided on the left part of the upper worm and a round rod being provided at its right end;
a lower worm installed at a position adjacent to the lower end of the housing and rotatably supported between the left sidewall and the middle wall, the lower worm being parallel with the upper worm and a left-handed helical tooth being provided on the lower worm;
an input transmission mechanism used to transmit a rotation from the rotation-outputting member mounted on the inner hub of the rear wheel to the upper worm and the lower worm and make them rotate rapidly in a same clockwise direction viewed from an inputting direction;
a flying-top clutch mechanism comprised of a pair of flying tops swingably mounted on two sides of the round rod part at the right end of the upper worm, a sliding bush sliding left and right at the left side of the flying tops along a round rod part at the right end of the upper worm, and two pulling wires connecting two flying tops with the sliding bush respectively, the flying tops spreading out under an action of the centrifugal force generated when the upper worm rotates at a high speed, and then pulling the sliding bush toward right through the pulling wires;
a gear holder mechanism including an inverted dual-L-shape bracket, a pivot hole being provided at the corner part of either L-shape bracket, the bracket swinging about a supporting shaft lying between the upper worm and the lower worm, two ends of the supporting shaft being fixed respectively to the bottom wall and the top plate, a mounting hole for fixing a wormwheel shaft being provided at the end of a lower arm of either L-shape bracket, a hole for fixing an end of a tension spring being provided between the mounting, hole of the upper L-shape bracket and the pivot hole, a half-round end head being provided at the end of an upper arm of either L-shape bracket and it abuting against the right side of the sliding bush of the flying-top clutch mechanism, when the sliding bush slides toward right, it pushing the end head and thus causing the dual-L-shape bracket to swing about the supporting shaft in the clockwise direction, and when the sliding bush stops pushing the end head, the dual-L-shape bracket swinging in the counterclockwise direction under the tension force of the tension spring, the gear holder mechanism also comprising a stroke-limiting sheet integral with the dual-L-shape bracket, a left bevel edge and a right bevel edge having an angle of about 45° being provided respectively at two sides in an opening of the stroke-limiting sheet;
an output transmission mechanism comprised of a bevel gear and a spur gear rotatably mounted on the supporting shaft and coaxially and fixedly connecting with each other, a bevel gear rotatably supported on the middle wall of the housing and engaging with the bevel gear on the supporting shaft, a leading screw having a left end connecting with the right end of the bevel gear on the middle wall of the housing and a right end supporting in the right sidewall, and a worm wheel and a spur gear rotatably mounted on a wormwheel shaft and coaxially and fixedly connected with each other, the wormwheel shaft being secured in the mounting holes on the end of the lower arms of the dual-L-shape bracket, the spur gear on the wormwheel shaft engaging with the spur gear on the supporting shaft, when the dual-L-shape bracket swings in the clockwise direction, the worm wheel engaging with the upper worm, the engagement point between them pushing the worm wheel towards the supporting shaft side along the tangential line of the worm wheel and causing the worm wheel to rotate in the clockwise direction, and when the dual-L-shape bracket swings in the counterclockwise direction, the worm wheel engaging with the lower worm, the engagement point between them pushing the worm wheel towards the supporting shaft side along the tangential line of the worm wheel and causing the worm wheel to rotate in the counterclockwise direction; a small boss being provided on the lateral side of the worm wheel and moving between two ends of an arc groove provided in the lateral side of the worm wheel, a spinning rod being rotatably mounted on the wormwheel shaft, a rod head of the spinning rod being disposed adjacent to the cirumferential of the worm wheel and being held by a free end of a spring steel wire fixed on the upper-L-shape bracket, due to a drive of the small boss, the spinning rod head rotating to the engagement points between the worm wheel and the upper or lower worm and making them disengage;
a stroke frame mechanism comprising a frame body moving left and right in the housing, an internal screw used to engage with the leading screw being provided at the upper end of the frame body, a forked frame sheet being swingably mounted on the frame body, an upper forked sheet at the front end of the forked frame sheet connecting with the other end of the tension spring on the gear holder mechanism and an lower forked sheet having a sloped edge that gradually branches off towards downward, the lower forked sheet slidably contacting with a bracket provided on the bottom wall of the housing and causing the forked frame sheet to swing up and down so as to adjust the tension force of the tension spring; a small bearing being disposed below a lateral surface of the frame body of the stroke frame mechanism, when the stroke frame mechanism moves to a position adjacent to left or right, the small bearing slidably contacting with the left or right bevel edge in the opening of the stroke-limiting sheet;
a dual-fulcrum elastic member secured at the lower end of the stroke frame mechanism, the elastic member comprising a base plate, left and right fulcrums disposed at the lower part of the base plate, an inverted T-shape sliding sheet wedged by and disposed on the fulcrums and swinging left and right about one of two fulcrums, and a tension spring connected between a fulcrum at the top end of the sliding sheet and a fixed point at the lower end of the base plate, one end of the connecting rod being rotatably connected with the fulcrum at the top end of the sliding sheet and the other end of it being rotatably connected with the rear derailleur.

2. The automatic gear shifter for bicycle according to claim 1, wherein the rotation-outputting member comprises a bevel gear, the input transmission mechainism comprises a pinion connected with the left end of the upper worm, a pinion connected with the left end of the lower worm, a middle gear disposed between two pinions and eageged with them, and a bevel gear coaxially and fixedly connected with the middle gear, the bevel gear may engage with the bevel gear fixedly mounted on the inner hub of the rear wheel of the bicycle.

3. The automatic gear shifter for bicycle according to claim 1, wherein when the dual-L-shape bracket swings about the supporting shaft in the clockwise direction, the worm wheel may engage with the upper worm that rotates at a high speed, thus making the output transmission mechanism generates a rotary output at a low speed in a direction;
when the dual-L-shape bracket lies in a middle position between the upper and lower worms, the cirumferential of the tooth top of the worm wheel may keep a certain distance from the tooth tops of the upper and lower worms, thus stopping the power transmission;
when the dual-L-shape bracket swings about the supporting shaft in the counterclockwise direction, the worm wheel may engage with the lower worm that rotates at a high speed, thus making the output transmission mechanism generates a rotary output at a low speed in an opposite direction.

4. The automatic gear shifter for bicycle according to claim 1, wherein the small boss is inserted into one end of a flat bar, and the other end of the flat bar is rotatably supported on the wormwheel shaft.

5. The automatic gear shifter for bicycle according to claim 1, wherein a distance between two ends of the arc groove may be changed to lengthen or shorten a reverse stroke, thus cancelling out a gap between various movable members.

6. The automatic gear shifter for bicycle according to claim 1, wherein a position-limiting elastic sheet is provided at a position of the stroke-limiting sheet adjacent to the right bevel edge, and a projecting sheet is provided at the right side of the frame body of the stroke frame mechanism, when the stroke frame mechanism moves toward right to arrive at a position corresponding to the lowest shift position, i.e., the first shift position, due to an action of the spinning rod, the dual-L-shape bracket swings in the clockwise direction and the worm wheel disengages with the lower worm, the projecting sheet abuts against the position-limiting elastic sheet and makes the dual-L-shape bracket incapable of swinging in the counterclockwise direction, thus stopping the stroke frame mechanism from moving toward right continuously.

7. The automatic gear shifter for bicycle according to claim 1, wherein a small gap is provided at a joint between the forked frame sheet and the frame body of the stroke frame body, so as to delay to push the forked frame sheet when the stroke frame moves reversely, thus cancelling out the ⅓ circle increased when the worm wheel rotates reversely and making a connecting point between the tension spring and the forked frame sheet stop at a same position as the worm wheel rotates straightforwardly.
